# EUROPEAN PATENT APPLICATION

(11) **EP 4 355 016 A1**
(43) Date of publication of application: **17.04.2024**
(21) Application number: 23751244.7
(22) Date of filing: 28.06.2023
(51) Int. Cl.: H04W 76/19, H04W 48/16, H04W 48/18, H04W 76/25, H04W 76/34, H04W 36/00, H04W 36/14, H04W 24/08, H04W 88/06

(54) **ELECTRONIC DEVICE FOR SWITCHING CELLULAR COMMUNICATION ON BASIS OF STATE OF ELECTRONIC DEVICE, AND ELECTRONIC DEVICE OPERATING METHOD**

(30) Priority: 30.08.2022 KR 20220109054; 28.09.2022 KR 20220123724
(71) Applicant: Samsung Electronics Co., Ltd., Suwon-si, Gyeonggi-do 16677 (KR)
(72) Inventor: LEE, Keonyoung, Suwon-si, Gyeonggi-do 16677 (KR); CHO, Minwoong, Suwon-si, Gyeonggi-do 16677 (KR)
(74) Representative: Arnold & Siedsma
(86) International application number: PCT/KR2023/009070
(87) International publication number: WO 2024/048947

(57) **Abstract**

In an electronic device and an operation method of the electronic device according to various embodiments, the electronic device may include a communication circuit supporting first cellular communication and second cellular communication; an application processor; and a communication processor, wherein the application processor is configured to: while the electronic device is connected through the first cellular communication, identify whether the electronic device satisfies a condition related to release of the first cellular communication; and in case the electronic device satisfies the condition related to release of the first cellular communication, transmit, to the communication processor, a signal indicating that the condition related to release of the first cellular communication is satisfied, and wherein the communication processor is configured to: on reception of the signal indicating that the condition related to release of the first cellular communication is satisfied, identify whether system information including information on a node adjacent to the node received from the node connected through the first cellular communication is received and/or whether a measurement object satisfies a specified condition; in case the system information is received and/or the measurement object satisfies the specified condition, disconnect the first cellular communication; and based on the system information and/or the measurement object, connect with the second cellular communication. In addition, various embodiments are possible.

## Description

### [Technical Field]

Various embodiments of the disclosure relate to an electronic device and an operation method of the electronic device, and to an electronic device that switches connected cellular communication based on a status of the electronic device.

### [Background Art]

Efforts are being made to develop an improved 5G communication system or pre-5G communication system to meet the increasing demand for wireless data traffic after the commercialization of the 4G communication system. For this reason, the 5G communication system or the pre-5G communication system is being called the Beyond 4G Network communication system or the Post Long Term Evolution (LTE) system. In order to achieve a high data rate, the 5G communication system, in addition to the band used by LTE (bands below 6GHz), implementation of the 5G communication system in the ultra-high frequency (mmWave) band (e.g., bands over 6GHz) is also being considered. In 5G communication systems, beamforming, massive Multiple Input Multiple Output (MIMO), full dimensional MIMO (FD-MIMO), array antennas, analog beam-forming, and large scale antenna technologies are being discussed.

The 5G mobile communication system may support a non-standalone mode (NSA) for transmitting or receiving data from a base station of 4G cellular communication and a base station of 5G cellular communication, or support a standalone (SA) mode for transmitting or receiving data from a base station of 5G cellular communication.

### [Disclosure of Invention]

### [Technical Problem]

The frequency band supported by the 5G cellular communication may also use a frequency band higher than that of the existing communication method. When an electronic device uses a frequency band communication method supported by 5G cellular communication, power consumption may be greater than that of using the existing communication method.

When power consumption increases, a phenomenon in which the temperature of the electronic device increases may occur. When the temperature of the electronic device increases, the actual usable time of the electronic device may be reduced as the power consumed by the electronic device increases further. Furthermore, when the temperature of the electronic device increases, various components included in the electronic device may be damaged, and a phenomenon in which higher power consumption is required may occur as threshold voltages for operating various components increase.

In order to prevent the phenomenon described above, the electronic device may switch from the 5G cellular communication to the 4G cellular communication that consumes relatively little power.

However, the electronic device may be in a state in which it is difficult to connect with the 4G cellular communication. For example, the electronic device may release the 5G cellular communication and attempt to connect with the 4G cellular communication while existing outside the coverage of a node supporting the 4G cellular communication. The electronic device may fail to search for a node supporting the 4G cellular communication, and may be switched to a state in which transmission or reception of data is impossible (e.g., radio link failure (RLF)). The electronic device may be in a state in which data may not be transmitted or received until it is reconnected to a node supporting the 5G cellular communication. Rather, in the situation described above, the electronic device may consume higher power compared to maintaining the connection of the 5G cellular communication.

### [Solution to Problem]

An electronic device according to various embodiments of the present disclosure may include a communication circuit supporting first cellular communication and second cellular communication; an application processor; and a communication processor, wherein the application processor is configured to while the electronic device is connected through the first cellular communication, identify whether the electronic device satisfies a condition related to release of the first cellular communication; and in case the electronic device satisfies the condition related to release of the first cellular communication, transmit, to the communication processor, a signal indicating that the condition related to release of the first cellular communication is satisfied, and wherein the communication processor is configured to on reception of the signal indicating that the condition related to release of the first cellular communication is satisfied, identify whether system information including information on a node adjacent to the node received from the node connected through the first cellular communication is received and/or whether a measurement object satisfies a specified condition; in case the system information is received and/or the measurement object satisfies the specified condition, disconnect the first cellular communication; and based on the system information and/or the measurement object, connect with the second cellular communication.

An operation method of an electronic device according to various embodiments of the present disclosure may include while the electronic device is connected through the first cellular communication, identifying, by an application processor of the electronic device, whether the electronic device satisfies a condition related to release of the first cellular communication of the electronic device; in case the electronic device satisfies the condition related to release of the first cellular communication, transmitting to a communication processor of the electronic device, by the application processor, a signal indicating that the condition related to release of the first cellular communication is satisfied; on reception of the signal indicating that the condition related to release of the first cellular communication is satisfied, identifying, by the communication processor, whether system information including information on a node adjacent to the node received from the node connected through the first cellular communication is received and/or whether a measurement object satisfies a specified condition; in case the system information is received and/or whether the measurement object satisfies a specified condition, disconnecting, by the communication processor, the first cellular communication; and based on the system information and/or the measurement object, determining whether to connect with the second cellular communication.

### [Advantageous Effects of invention]

An electronic device and an operation method of the electronic device according to various embodiments of the disclosure may determine whether to release the first cellular communication and connect with the second cellular communication based on information related to the second cellular communication when the electronic device satisfies conditions related to the release of the first cellular communication. The electronic device may perform release of the first cellular communication and connection of the second cellular communication in a state in which the second cellular communication may be smoothly connected. Accordingly, the electronic device may prevent a phenomenon (e.g., Radio Link Failure (RLF)) occurring by releasing the first cellular communication and connecting the second cellular communication even when the connection of the second cellular communication is difficult.

### [Brief Description of Drawings]

FIG. 1 is a block diagram of an electronic device according to various embodiments of the disclosure.
FIG. 2 is a block diagram of an electronic device for supporting legacy network communication and 5G network communication according to various embodiments.
FIG. 3 is a diagram illustrating a protocol stack structure of a network 100 for legacy communication and/or 5G communication according to an embodiment.
FIGS. 4A, 4B and 4C are diagrams illustrating wireless communication systems providing a network of legacy communication and/or 5G communication according to various embodiments.
FIG. 5 is a diagram illustrating an electronic device and a cellular network according to an embodiment.
FIG. 6 is a block diagram of an electronic device according to an embodiment.
FIG. 7A is a diagram illustrating an embodiment in which an electronic device according to an embodiment determines whether to release first cellular communication and/or connect with second cellular communication.
FIG. 7B is a diagram illustrating an embodiment in which an electronic device according to an embodiment searches for a node supporting second cellular communication for connection of second cellular communication.
FIG. 8 is an operation flowchart illustrating an operation method of an electronic device according to an embodiment.

### [Mode for the Invention]

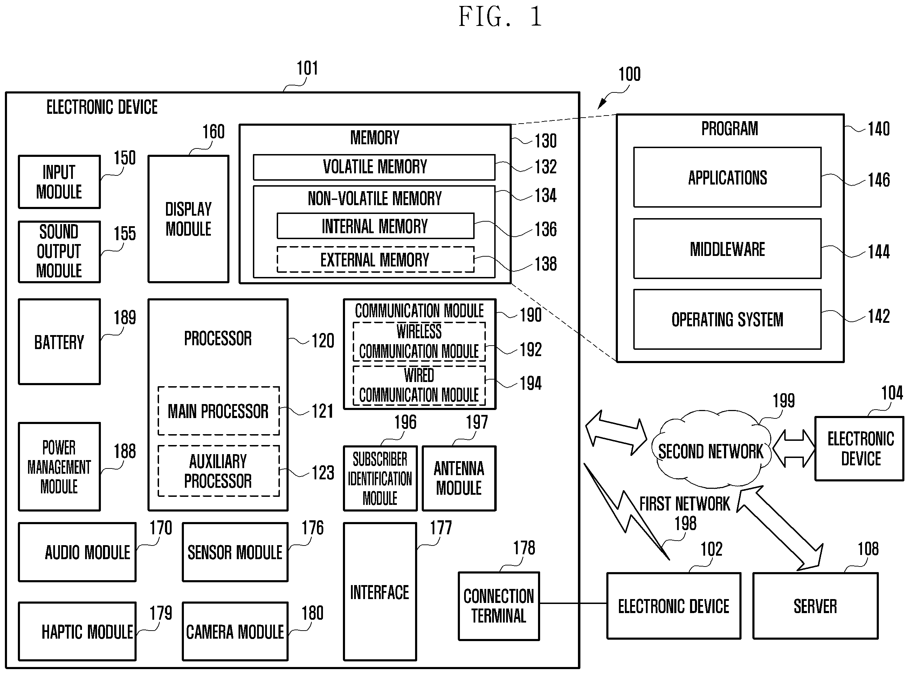

FIG. 1 is a block diagram illustrating an electronic device 101 in a network environment 100 according to certain embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

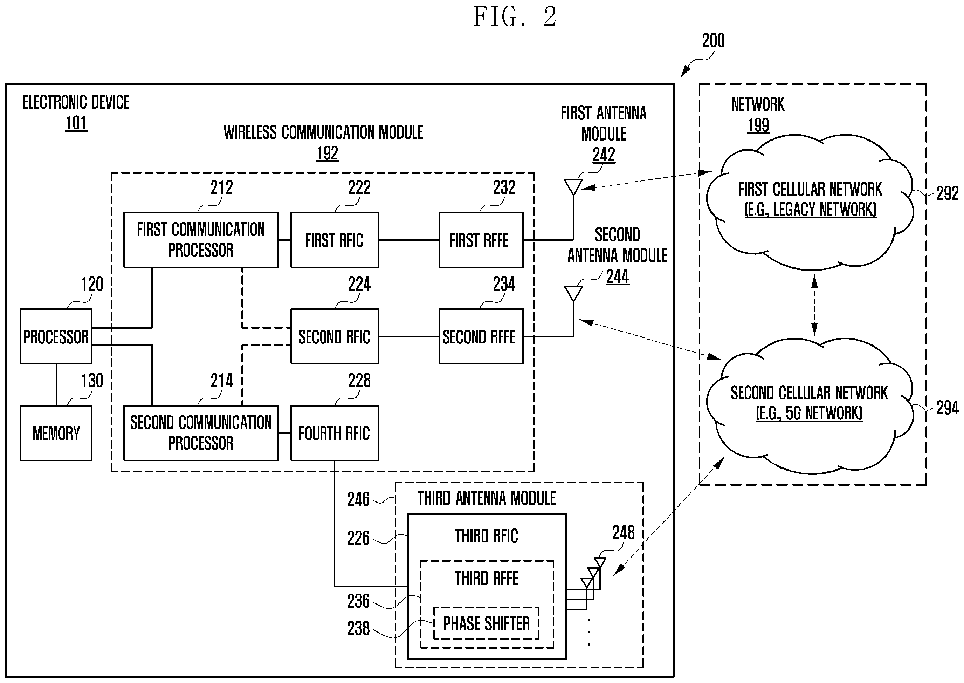

FIG. 2 is a block diagram 200 of an electronic device 101 for supporting legacy network communication and 5G network communication according to certain embodiments. Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The network 199 may include a first network 292 and a second network 294. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments, the first network may be a legacy network including 2G, 3G, 4G, or long term evolution (LTE) network. The second communication processor 214 may establish a communication channel corresponding to a designated band (e.g., approximately 6GHz to 60 GHz) among bands to be used for wireless communication with the second network 294, and may support 5G network communication via the established channel. According to certain embodiments, the second network 294 may be a 5G network defined in 3GPP. Additionally, according to an embodiment, the first communication processor 212 or the second communication processor 214 may establish a communication channel corresponding to another designated band (e.g., lower than 6GHz) among bands to be used for wireless communication with the second network 294, and may support 5G network communication via the established channel. According to an embodiment, the first communication processor 212 and the second communication processor 214 may be implemented in a single chip or a single package. According to certain embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6GHz to 60GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment, the third RFFE 236 may be implemented as a part of the third RFIC 226.

According to an embodiment, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9GHz to 11 GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFFE 226. The fourth RFIC 228 may convert the IF signal to a baseband signal so that the base band signal is processed by the second communication processor 214.

According to an embodiment, the first RFIC 222 and the second RFIC 224 may be implemented as a single chip or at least a part of the single package. According to an embodiment, the first RFFE 232 and the second RFFE 234 may be implemented as a single chip or at least a part of the single package. According to an embodiment, at least one antenna module of the first antenna module 242 or the second antenna module 244 may be omitted, or may be combined with another antenna module so as to process RF signals in a plurality of bands.

According to an embodiment, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6GHz to 60GHz) used for 5G network communication, the loss being caused by a transmission line. Accordingly, the electronic device 101 may improve the quality or speed of communication with the second network 294 (e.g., 5G network).

According to an embodiment, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 230, and may be accessed by another component (e.g., the processor 120, the first communication processor 212, or the second communication processor 214).

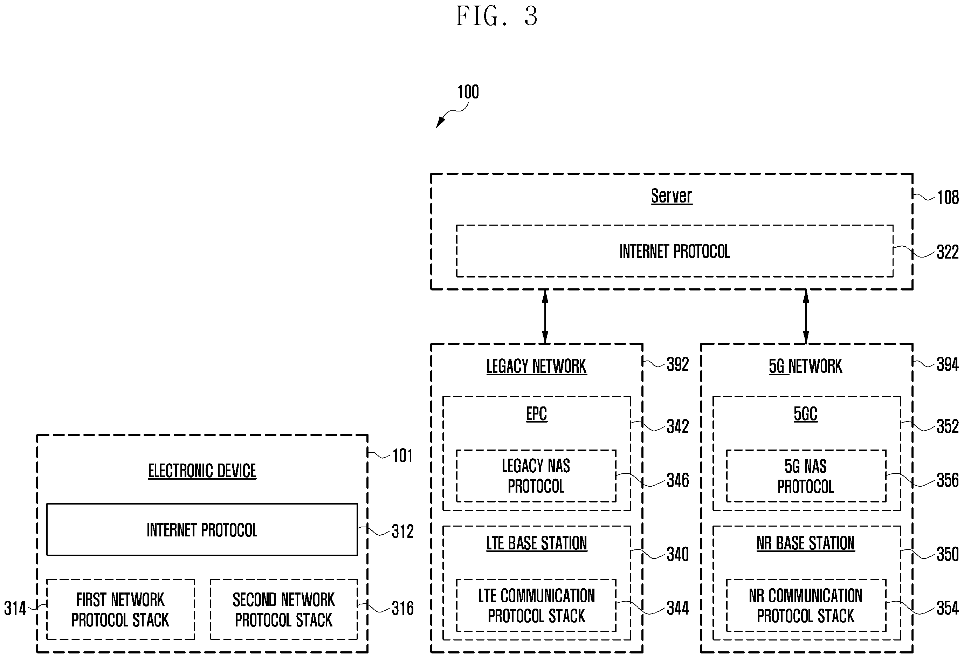

FIG. 3 illustrates a protocol stack structure of the network 100 of legacy communication and/or 5G communication according to an embodiment.

Referring to FIG. 3, the network 100 according to an illustrated embodiment may include the electronic device 101, a legacy network 392, a 5G network 394, and the server 108.

The electronic device 101 may include an Internet protocol 312, a first communication protocol stack 314, and a second communication protocol stack 316. The electronic device 101 may communicate with the server 108 through the legacy network 392 and/or the 5G network 394.

According to an embodiment, the electronic device 101 may perform Interne communication associated with the server 108 through the Internet protocol 312 (for example, a TCP, a UDP, or an IP). The Internet protocol 312 may be executed by, for example, a main processor (for example, the main processor 121 of FIG. 1) included in the electronic device 101.

According to another embodiment, the electronic device 101 may perform wireless communication with the legacy network 392 through the first communication protocol stack 314. According to another embodiment, the electronic device 101 may perform wireless communication with the 5G network 394 through the second communication protocol stack 316. The first communication protocol stack 314 and the second communication protocol stack 316 may be executed by, for example, one or more communication processors (for example, the wireless communication module 192 of FIG. 1) included in the electronic device 101.

The server 108 may include an Internet protocol 322. The server 108 may transmit and receive data related to the Internet protocol 322 to and from the electronic device 101 through the legacy network 392 and/or the 5G network 394. According to an embodiment, the server 108 may include a cloud computing server existing outside the legacy network 392 or the 5G network 394. According to another embodiment, the server 108 may include an edge computing server (or a mobile edge computing (MEC) server) located inside at least one of the legacy network or the 5G network 394.

The legacy network 392 may include an LTE eNode B (eNB) 340 and an EPC 342. The LTE eNB 340 may include an LTE communication protocol stack 344. The EPC 342 may include a legacy NAS protocol 346. The legacy network 392 may perform LTE wireless communication with the electronic device 101 through the LTE communication protocol stack 344 and the legacy NAS protocol 346.

The 5G network 394 may include an NR gNB 350 and a 5GC 352. The NR gNB 350 may include an NR communication protocol stack 354. The 5GC 352 may include a 5G NAS protocol 356. The 5G network 394 may perform NR wireless communication with the electronic device 101 through the NR communication protocol stack 354 and the 5G NAS protocol 356.

According to an embodiment, the first communication protocol stack 314, the second communication protocol stack 316, the LTE communication protocol stack 344, and the NR communication protocol stack 354 may include a control plane protocol for transmitting and receiving a control message and a user plane protocol for transmitting and receiving user data. The control message may include a message related to at least one of, for example, security control, bearer setup, authentication, registration, or mobility management. The user data may include, for example, the remaining data except other than the control message.

According to an embodiment, the control plane protocol and the user plane protocol may include a physical (PHY) layer, a medium access control (MAC) layer, a radio link control (RLC) layer, or a packet data convergence protocol (PDCP) layer. The PHY layer may channel-code and modulate data received from, for example, a higher layer (for example, the MAC layer), transmit the data through a radio channel, demodulate and decode the data received through the radio channel, and transmit the data to the higher layer. The PHY layer included in the second communication protocol stack 316 and the NR communication protocol stack 354 may further perform an operation related to beamforming. The MAC layer may logically/physically map, for example, data to a radio channel for transmitting and receiving the data and perform a hybrid automatic repeat request (HARQ) for error correction. The RLC layer may perform, for example, data concatenation, segmentation, or reassembly, and data sequence identification, reordering, or duplication detection. The PDCP layer may perform an operation related to, for example, ciphering of a control message and user data and data integrity. The second communication protocol stack 316 and the NR communication protocol stack 354 may further include a service data adaptation protocol (SDAP). The SDAP may manage allocation of radio bearers on the basis of quality of service (QoS) of user data.

According to certain embodiments, the control plane protocol may include a radio resource control (RRC) layer and a non-access stratum (NAS) layer. The RRC layer may process control, for example, data related to radio bearer setup, paging, or mobility management. The NAS may process, for example, a control message related to authentication, registration, or mobility management.

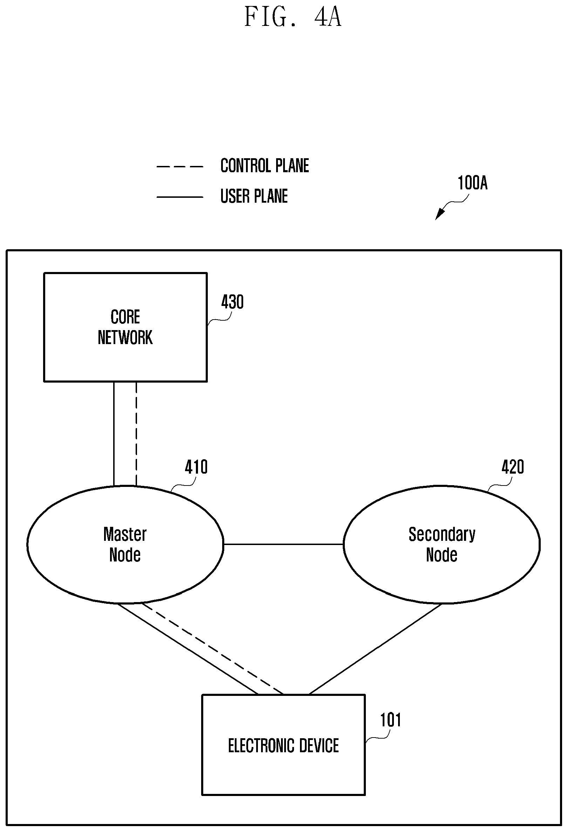

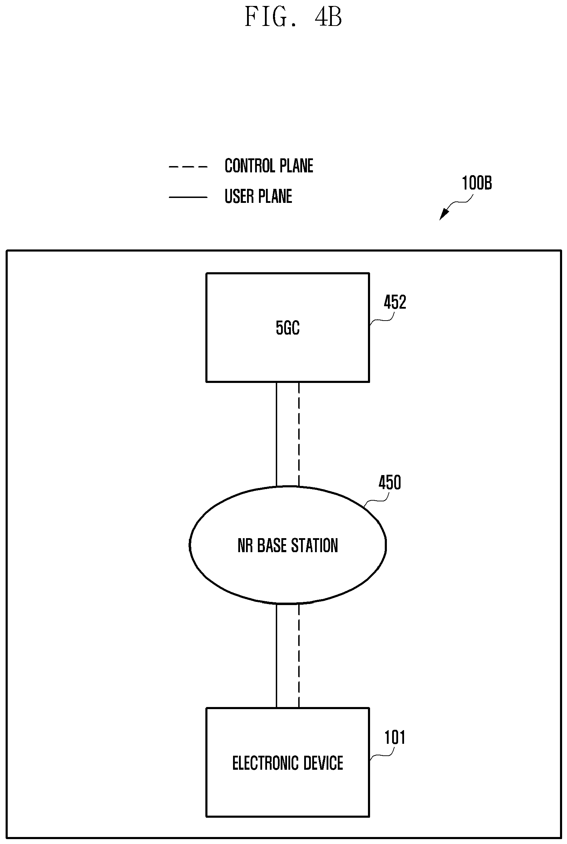

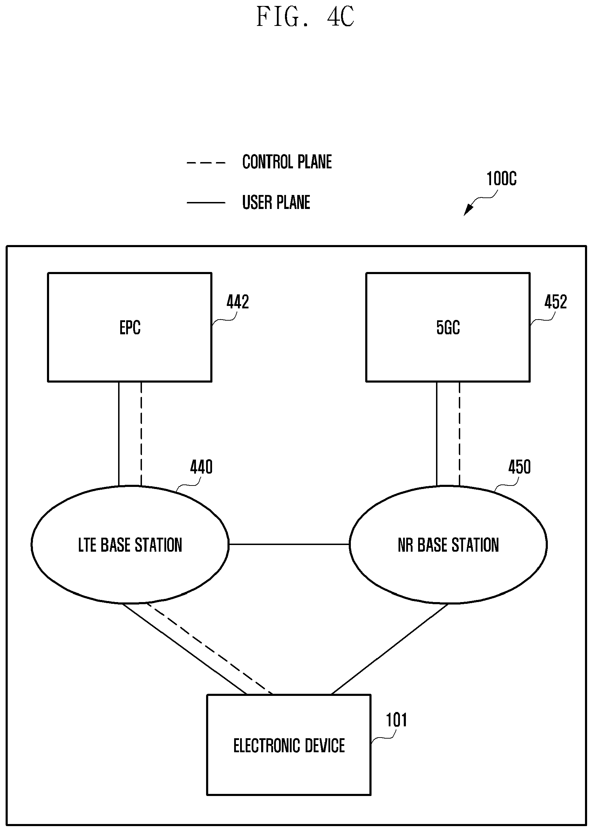

FIG. 4A illustrates a wireless communication system providing a network of legacy communication and/or 5G communication according to certain embodiments, FIG. 4B illustrates a wireless communication system providing a network of legacy communication and/or 5G communication according to certain embodiments, and FIG. 4C illustrates a wireless communication system providing a network of legacy communication and/or 5G communication according to certain embodiments. Referring to FIGs. 4A to 4C, network environments 100A to 100C may include at least one of a legacy network and a 5G network. The legacy network may include, for example, a 4G or LTE eNB 450 (for example, an eNodeB (eNB)) of the 3GPP standard supporting radio access with the electronic device 101 and an evolved packet core (EPC) 451 for managing 4G communication. The 5G network may include, for example, a new radio (NR) gNB 450 (for example, a gNodeB (gNB)) supporting radio access with the electronic device 101 and a 5th generation core (5GC) 452 for managing 5G communication of th electronic device 101.

According to certain embodiments, the electronic device 101 may transmit and receive a control message and user data through legacy communication and/or 5G communication. The control message may include, for example, a control message related to at least one of security control of the electronic device 101, bearer setup, authentication, registration, or mobility management. The user data may be, for example, user data other than a control message transmitted and received between the electronic device 101 and a core network 430 (for example, the EPC 442).

Referring to FIG. 4A, the electronic device 101 according to an embodiment may transmit and receive at least one of a control message or user data to and from at least some of the 5G network (for example, the NR gNB 450 and the 5GC 452) using at least some of the legacy network (for example, the LTE eNB 440 and the EPC 442).

According to certain embodiments, the network environment 100A may include a network environment for providing wireless communication dual connectivity (multi-radio access technology (RAT) dual connectivity (MR-DC)) to the LTE eNB 440 and the NR gNB 450 and transmitting and receiving a control message to and from the electronic device 101 through one core network 430 of the EPC 442 or the 5GC 452.

According to certain embodiments, one of the MR-DC environment, the LTE eNB 440 or the NR gNB 450 may operate as a master node (MN) 410, and the other may operate as a secondary node (SN) 420. The MN 410 may be connected to the core network 430 and transmit and receive a control message. The MN 410 and the SN 420 may be connected to each other through a network interface and transmit and receive a message related to radio resource (for example, communication channel) management.

According to certain embodiments, the MN 410 may include the LTE eNB 450, the SN 420 may include the NR gNB 450, and the core network 430 may include the EPC 442. For example, a control message may be transmitted and received through the LTE eNB 440 and the EPC 442, and user data may be transmitted and received through the LTE eNB 450 and the NR gNB 450.

Referring to FIG. 4B, according to certain embodiments, the 5G network may independently transmit and receive a control message and user data to and from the electronic device 101.

Referring to FIG. 4C, the legacy network and the 5G network according to certain embodiments may independently provide data transmission and reception. For example, the electronic device 101 and the EPC 442 may transmit and receive a control message and user data through the LTE eNB 450. According to another embodiment, the electronic device 101 and the 5GC 452 may transmit and receive a control message and user data through the NR gNB 450.

According to certain embodiments, the electronic device 101 may be registered in at least one of the EPC 442 or the 5GC 450 and transmit and receive a control message.

According to certain embodiments, the EPC 442 or the 5GC 452 may interwork and manage communication of the electronic device 101. For example, movement information of the electronic device 101 may be transmitted and received through an interface between the EPC 442 and the 5GC 452.

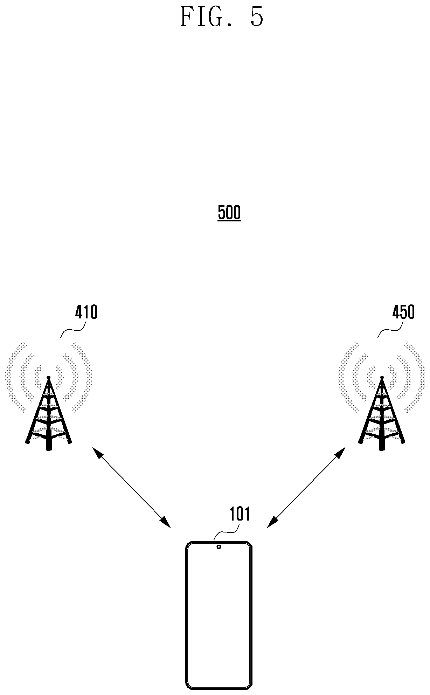

FIG. 5 is a diagram illustrating an electronic device and a cellular network according to various embodiments.

According to various embodiments of the disclosure, a cellular network 500 may include a first node (e.g., the NR base station 450 of FIG. 4B) and/or a second node (e.g., the master node 410 of FIG. 4A).

According to various embodiments of the disclosure, the first node 450 may be a base station supporting first cellular communication. The first cellular communication is any one communication method among various cellular communication methods supportable by the electronic device 101, and may refer to, for example, a communication method on the second cellular network 294 of FIG. 2. For example, the first cellular communication may be a communication method using a 5G mobile communication method (e.g., new radio). According to an embodiment, the first node 450 may be a base station supporting a standalone mode supported by the first cellular communication. The standalone mode may be a mode in which the electronic device 101 transmits or receives data by using a base station supporting the first cellular communication. The electronic device 101 may be connected to the first node 450 to transmit or receive data. Alternatively, the first node 450 may be a base station supporting a non-standalone mode supported by the first cellular communication. The non-standalone mode may be a mode in which the electronic device 101 transmits or receives data by using a base station supporting the first cellular communication and a base station supporting the second cellular communication. The electronic device 101 may be connected to the first node 450 and/or the second node 460 to transmit or receive data.

According to various embodiments of the disclosure, the second node 410 may be a base station supporting second cellular communication. The second cellular communication is any one communication method among various cellular communication methods supportable by the electronic device (e.g., the electronic device 101 in FIG. 1), and may refer to, for example, a communication method on the first cellular network 292 of FIG. 2. For example, the second cellular communication may be a communication method using a 4G mobile communication method (e.g., long-term evolution).

According to various embodiments of the disclosure, the first cellular communication may be cellular communication that performs data communication using a relatively higher frequency band than the second cellular communication. The frequency band of the first cellular communication may have a higher frequency band than the frequency band of the second cellular communication. The first node 450 supporting the first cellular communication may have a relatively smaller coverage than the second node 410 supporting the second cellular communication due to characteristics of the high frequency band. In addition, the strength of a signal transmitted when the electronic device 101 performs the first cellular communication may be greater than the strength of a signal transmitted when the electronic device 101 performs the second cellular communication.

Accordingly, power consumed by the electronic device 101 while performing the first cellular communication may be greater than power consumed while performing the second cellular communication. In addition, the temperature of the electronic device 101 may increase due to heat generated while performing the first cellular communication. The electronic device 101 may reduce power consumption and/or heat generation by switching from the first cellular communication to the second cellular communication according to whether a specified condition is satisfied.

However, the electronic device 101 may be in a state in which it is difficult to connect with the second cellular communication. For example, the electronic device 101 may release the first cellular communication and attempt to connect with the second cellular communication while existing outside the coverage of the second node 450. The electronic device 101 may fail to search for the second node 450, which is a node supporting the second cellular communication, and may be in a state in which transmission or reception of data is impossible (e.g., radio link failure (RLF)). The electronic device 101 may be unable to transmit or receive data until it is reconnected to the first node 410 supporting the first cellular communication. Rather, the electronic device 101 may consume higher power than maintaining the connection of the first cellular communication.

Hereinafter, in order to mitigate (or solve) the above phenomenon, an embodiment in which the electronic device 101 disconnects the first cellular communication and/or connects the second cellular communication based on information related to the second node 450 will be described.

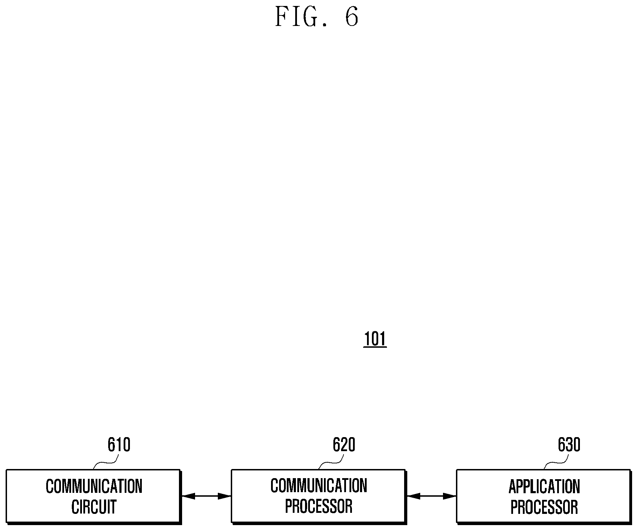

FIG. 6 is a diagram illustrating an electronic device according to an embodiment.

Referring to FIG. 6, an electronic device (e.g., the electronic device 101 of FIG. 1) may include a communication circuit (e.g., the wireless communication module 192 of FIG. 1) 610, a communication processor (e.g., the first communication processor 212 of FIG. 2 and/or the second communication processor 242 of FIG.2) 620, and/or an application processor (e.g., the processor 120 of FIG. 1) 630.

The application processor 610 may control various elements of the electronic device 101. Detailed operations will be described later.

The communication processor 620 may transmit and/or receive data through the first cellular communication and/or the second cellular communication. The communication processor 640 may be connected to a first node (e.g., the first node 410 of FIG. 5A) through the first cellular communication or to a second node (e.g., the second node 450 of FIG. 5A) through the second cellular communication. The communication processor 620 may transmit user data received from the application processor 610 through the first cellular communication and/or the second cellular communication, and transmit user data received through the first cellular communication and/or the second cellular communication to the application processor 620.

The first cellular communication is any one communication method among various cellular communication methods supportable by the electronic device 101, and may refer to, for example, a communication method on the second cellular network 294 of FIG. 2. For example, the first cellular communication may be a communication method using a 5G mobile communication method (e.g., new radio).

The second cellular communication is any one communication method among various cellular communication methods supportable by the electronic device (e.g., the electronic device 101 of FIG. 1), and may refer to, for example, a communication method on the first cellular network 292 of FIG. 2. For example, the second cellular communication may be a communication method using a 4G mobile communication method (e.g., long-term evolution).

The communication circuit 630 is a communication circuit supporting the first cellular communication and/or the second cellular communication, and may provide the electronic device 101 with communication with an external electronic device (e.g., the external electronic device 104 of FIG. 1) through the first cellular communication and/or the second cellular communication.

The electronic device 101 may disconnect the first cellular communication and connect with the second cellular communication in order to reduce heat generation and/or power consumption while the first cellular communication is connected. Hereinafter, a specific embodiment of disconnecting the first cellular communication will be described.

The application processor 620 may identify whether the electronic device 101 satisfies a condition related to release of the first cellular communication while connected through the first cellular communication.

Conditions related to release of the first cellular communication may include conditions related to the temperature of the electronic device 101. Conditions related to release of the first cellular communication may include a condition in which the temperature of the electronic device 101 is greater than or equal to a specified value.

The application processor 630 may receive a temperature measured by a temperature sensor (e.g., the sensor module 176 of FIG. 1). The temperature measured by the temperature sensor 176 may include the temperature of a part of the electronic device 101 in which the temperature sensor 176 is disposed. The application processor 630 may identify whether the temperature measured by the temperature sensor 176 satisfies a specified condition. The application processor 630 may identify that the temperature measured by the temperature sensor 176 is greater than or equal to a specified value, and determine that the electronic device 101 satisfies a condition related to release of the first cellular communication.

The conditions related to release of the first cellular communication may include conditions related to throughput of data transmitted or received by the electronic device 101. The conditions related to release of the first cellular communication may include conditions that the throughput is less than or equal to (or less than) a specified value.

Throughput of data transmission may be defined as a traffic amount of transmitted and/or received data per unit time. The application processor 630 may monitor (or track) the traffic amount of generated by the running application (or background application). The application processor 630 may monitor (or track) the traffic amount of data transmitted or received through the first cellular communication and/or the second cellular communication, and identify whether the throughput satisfies a specified condition. The application processor 630 may determine that the throughput is less than or equal to (or less than) the specified value and determine that the electronic device 101 satisfies the condition related to release of the first cellular communication.

The application processor 630 may identify that the temperature and/or throughput does not satisfy the specified condition and maintain the connection of the first cellular communication. The fact that the temperature and/or the throughput does not satisfy specified conditions may refer to that the temperature of the electronic device 101 is less than or equal to the specified value or that the throughput is greater than or equal to the specified value. Maintaining the connection of the first cellular communication may refer to that the electronic device 101 may transmit and/or receive data through the first cellular communication. In response to identifying that the temperature and/or throughput does not satisfy the specified condition, the application processor 620 may maintain the connection of the first cellular communication, continuously identify the temperature and/or throughput, and identify whether the specified condition is satisfied.

The condition related to release of the first cellular communication may include various conditions other than the temperature and throughput described above. For example, the condition related to release of the first cellular communication may include a condition in which a display (e.g., the display module 160 of FIG. 1) is deactivated. For another example, the condition related to release of the first cellular communication may include a condition related to whether the specified application is executed.

The application processor 630 may maintain the connection of the first cellular communication based on identifying that the state of the electronic device 101 does not satisfy the condition related to release of the first cellular communication. The fact that the state of the electronic device 101 does not satisfy the condition related to release of the first cellular communication may refer to that the temperature of the electronic device 101 is less than or equal to the specified value or the throughput is greater than or equal to the specified value. Maintaining the connection of the first cellular communication may refer to that the electronic device 101 may transmit and/or receive data through the first cellular communication. In response to identifying that the state of the electronic device 101 does not satisfy the condition related to release of the first cellular communication, the application processor 630 may maintain the connection of the first cellular communication, continuously identify the state of the electronic device 101, and identify whether the condition related to release of the first cellular communication is satisfied.

The application processor 630 may identify that the state of the electronic device 101 satisfies the condition related to release of the first cellular communication, and control the communication processor 620 to perform a series of operations for releasing the first cellular communication. The application processor 630 may transmit a signal requesting disconnection of the first cellular communication to the communication processor 620. Alternatively, the application processor 630 may transmit a signal indicating that the condition related to disconnection of the first cellular communication is satisfied to the communication processor 620.

The communication processor 620, based on receiving a signal requesting disconnection of the first cellular communication, may determine whether to perform disconnection of the first cellular communication and/or connection of the second cellular communication based on information related to a node supporting the second cellular communication. The communication processor 620, based on receiving a signal indicating that a condition related to disconnection of the first cellular communication is satisfied, may determine whether to perform disconnection of the first cellular communication and/or connection of the second cellular communication based on information related to a node supporting the second cellular communication.

The information related to the node supporting the second cellular communication may include system information including information on a node adjacent to the node supporting the first cellular communication (e.g., the first node 410).

The communication processor 620 may receive system information block (SIB) broadcast by the first node 410 supporting the first cellular communication while the electronic device 101 is in an idle state of the first cellular communication. The idle state may refer to a state in which the connection with the first node 410 is released due to various causes (e.g., data to be transmitted or received does not exist) after the electronic device 101 and the first node 410 are connected.

Alternatively, the communication processor 620 may receive system information broadcast by the first node 410 before the electronic device 101 is connected to the first node 410.

The system information broadcasted by the first node 410 may include various types of information. According to an example, the system information may include SIB 5 defined in 3GPP TS. 36.331 v15.6. The SIB 5 is a node adjacent to the first node 410 and may include information on a node (e.g., the second node 450 of FIG. 5) supporting a communication method (e.g., the second cellular communication) different from that of the first node 410. For example, when the first node 410 and the second node 450 are adjacent to each other, the first system information may include information on the second node 450. The information on the second node 450 is information required for connection with the second node 450, and may include physical cell identification (PCI) of the second node 450, a frequency band used by the second node 450, and/or a priority of the frequency band.

The system information may include not only the SIB 5 but also various system information (e.g., SIB 1). The SIB 1 may include operator information of the first node 410 or information required when accessing the first node 410 (or random access (RA)). The communication processor 620 may perform synchronization with the first node 410 based on the SIB 1 and receive various system information including the SIB 5 from the first node 410.

The communication processor 620 may determine whether to disconnect the first cellular communication and/or connect with the second cellular communication based on whether the system information, which is information indicating whether the node adjacent to a node (e.g., the first node 410) connected through the first cellular communication supports the second cellular communication, has been received.

The communication processor 620 may determine whether to disconnect the first cellular communication and/or connect with the second cellular communication based on receiving the system information, which is information indicating whether the node adjacent to a node (e.g., the first node 410) connected through the first cellular communication supports the second cellular communication. A state in which the system information, which is information indicating whether the node (e.g., the second node 450) adjacent to a node (e.g., the first node 410) connected through the first cellular communication supports the second cellular communication has been received may refer to that the electronic device 101 may exist within the coverage of the node supporting the second cellular communication. Accordingly, the electronic device 101 may perform a smooth connection of the second cellular communication.

The communication processor 620 may maintain connection of the first cellular communication based on not receiving the system information, which is information indicating whether the node adjacent to a node (e.g., the first node 410) connected through the first cellular communication supports the second cellular communication. A state in which the system information, which is information indicating whether the node (e.g., the second node 450) adjacent to a node (e.g., the first node 410) connected through the first cellular communication supports the second cellular communication has not been received may refer to that the electronic device 101 may exist outside the coverage of the node supporting the second cellular communication. Accordingly, the electronic device 101 may prevent radio link failure (RLF) that may occur while attempting to connect with the second cellular communication, and prevent unnecessary power consumption by not attempting to connect with the second cellular communication.

The information related to the node supporting the second cellular communication may include a measurement object including information on a node adjacent to the node supporting the first cellular communication (e.g., the first node 410).

The communication processor 620 may identify a measurement object (or measobject) included in the RRC reconfiguration message received through the first node 410, and identify whether the measurement object satisfies the specified condition in the RRC connected state of the first cellular communication of the electronic device 101.

The specified condition may include a condition in which the measurement object includes information (e.g., MeasObjectEUTRA) on the node (e.g., the second node 450) supporting the second cellular communication.

The communication processor 620 may determine whether to disconnect the first cellular communication and/or connect with the second cellular communication based on whether the measurement object includes information indicating whether the node (e.g., the second node 450) adjacent to the node (e.g., the first node 410) connected through the first cellular communication supports the second cellular communication.

The communication processor 620 may disconnect the first cellular communication and/or connect with the second cellular communication based on that the measurement object includes information indicating whether the node (e.g., the second node 450) adjacent to the node (e.g., the first node 410) connected through the first cellular communication supports the second cellular communication.

The fact that the measurement object includes information indicating whether the node (e.g., the second node 450) adjacent to the node (e.g., the first node 410) connected through the first cellular communication supports the second cellular communication may refer to that the electronic device 101 may exist within the coverage of the node supporting the second cellular communication. Accordingly, the electronic device 101 may perform a smooth connection of the second cellular communication.

The communication processor 620 may maintain connection of the first cellular communication based on that the measurement object does not include information indicating whether the node (e.g., the second node 450) adjacent to the node (e.g., the first node 410) connected through the first cellular communication supports the second cellular communication. The fact that the measurement object does not include information indicating whether the node (e.g., the second node 450) adjacent to the node (e.g., the first node 410) connected through the first cellular communication supports the second cellular communication may refer to that the electronic device 101 may exist outside the coverage of the node supporting the second cellular communication. Accordingly, the electronic device 101 may prevent radio link failure (RLF) that may occur while attempting to connect with the second cellular communication, and prevent unnecessary power consumption by not attempting to connect with the second cellular communication. The communication processor 620 may perform a procedure of searching for the node supporting the second cellular communication based on the decision to disconnect the first cellular communication and connect with the second cellular communication.

The communication processor 620 may search for the node supporting the second cellular communication based on the system information and/or the measurement object.

The communication processor 620 may search for the node supporting the second cellular communication based on the frequency band used by the second node 450 included in the system information. The communication processor 620 may search for a node supporting the second cellular communication by controlling the communication circuit 610 to receive a signal of a frequency band used by the second node 450 included in the system information, and receiving the signal of the frequency band used by the second node 450 included in the system information.

The communication processor 620 may search for the node supporting the second cellular communication based on the frequency band used by the second node 450 included in the measurement object. The communication processor 620 may search for a node supporting the second cellular communication by controlling the communication circuit 610 to receive a signal of a frequency band used by the second node 450 included in the measurement object, and receiving the signal of the frequency band used by the second node 450 included in the system information.

The communication processor 620 may select a node having the smallest bandwidth when a node supporting the second cellular communication is searched, and at least one node is found. The communication processor 620 may perform a connection procedure with the selected node.

The communication processor 620 may select a node having a smaller bandwidth than currently connected node (e.g., the first node 410) when a node supporting the second cellular communication is searched, and at least one node is found. The communication processor 620 may perform a connection procedure with the selected node.

The communication processor 620 may select a node whose quality of the searched node is equal to or greater than a specified value and a bandwidth smaller than that of a currently connected node (e.g., the first node 410) when a node supporting the second cellular communication is searched, and at least one node is found. The communication processor 620 may perform a connection procedure with the selected node.

The communication processor 620 may perform an operation of measuring the quality of a signal broadcast by the second node 450 included in the measurement object when connected to the node supporting the first cellular communication (e.g., RRC connected state). The communication processor 620 may measure the quality of the signal broadcast by the second node 450, which is the node supporting the second cellular communication, and transmit a measurement report including the quality of the signal broadcast by the second node 450 to the first node 410 or the cellular network based on the confirmation that the quality satisfies the specified condition.

The first node 410 or the cellular network receiving the measurement report may transmit a handover command to the second node 450 to the electronic device 101 according to the quality of the signal broadcast by the second node 450 included in the measurement report. The communication processor 620 may perform a series of operations (e.g., initial access) for connection with the second node 450 based on reception of the handover command.

The communication processor 620 may identify the quality of the signal broadcast by the second node 450 when the connection with the node supporting the first cellular communication is released (e.g., RRC idle state), and perform a connection (e.g., cell reselection) with the second node 450 when the signal quality satisfies a specified condition.

The communication processor 620 may search for a node supporting the second cellular communication based on system information and/or a measurement object, and when the search fails, the communication processor 620 may again attempt to search for the node supporting the second cellular communication through the frequency band of the second cellular communication (or a frequency band different from the previously searched frequency band). When the communication processor 620 attempts to search for the node supporting the second cellular communication again, the communication processor 620 may again attempt to search for the node supporting the second cellular communication through the entire frequency band supported by the communication circuit 610. The communication processor 620 may perform a connection procedure with the searched node when the search for the node supporting the second cellular communication is successful. Alternatively, the communication processor 620 may maintain the connection of the first cellular communication when the search for the node supporting the second cellular communication fails.

The communication processor 620 may search for the node supporting the second cellular communication based on the system information and/or the measurement object. Alternatively, the communication processor 620 may search for the node supporting the second cellular communication based on history information stored in a memory (e.g., the memory 130 of FIG. 1). The history information may include information on nodes to which the electronic device 101 was previously connected through the second cellular communication. The communication processor 620 may perform an operation of searching for the node previously connected through the second cellular communication by using node information included in the history information.

The electronic device 101 may activate a timer related to an operation of searching for a node connected through the second cellular communication, and search for the node to be connected through the second cellular communication until the timer expires or until the node to be connected through the second cellular communication is searched.

The communication processor 620 may again attempt to search for a node supporting the second cellular communication through the frequency band of the second cellular communication (or a frequency band different from the previously searched frequency band) when the search for the node supporting the second cellular communication fails based on the system information, the history information, and/or the measurement object. The communication processor 620 may again attempt to search for the node supporting the second cellular communication through the entire frequency band supported by the communication circuit 610 when attempting to search for the node supporting the second cellular communication again. The communication processor 620 may activate a timer related to an operation of searching for the node to be connected through the second cellular communication, and repeatedly perform the operation of searching for the node to be connected through the second cellular communication until the timer expires or until the node to be connected through the second cellular communication is searched.

The communication processor 620 may search for the node supporting the second cellular communication based on the history information, the system information, and/or the measurement object, and maintain the first cellular communication connection when the search fails.

The communication processor 620 may prevent power consumption for the search for the second cellular communication by not performing the additional search.

In performing a search for the node supporting the second cellular communication, the communication processor 620 may identify network identification information (PLMN; public land mobile network) of a cellular communication operator obtained from the system information and/or the measurement object, and/or a tracking area code (TAC) used to track the location of the electronic device 101. The communication processor 620 may store history information including the PLMN and the TAC when the search for the node supporting the second cellular communication succeeds or fails, in a memory (e.g., the memory 130 of FIG. 1). In determining whether to connect with the second cellular communication, the communication processor 620 may identify the PLMN and TAC when the search for the node supporting the second cellular communication fails based on the history information, and identify whether the system information and/or the PLMN and TAC obtained from the measurement object match. The communication processor 620 may not perform the connection of the second cellular communication (or may maintain the connection of the first cellular communication) in case that the PLMN and the TAC obtained from the system information and/or the measurement object match the PLMN and the TAC when the search for the node supporting the second cellular communication fails.

In a state in which the electronic device 101 is connected through the second cellular communication, the application processor 630 may identify whether the state of the electronic device 101 satisfies a condition related to connection of the first cellular communication.

The condition related to connection of the first cellular communication may include a condition related to the temperature of the electronic device 101. The condition related to release of the first cellular communication may include a condition in which the temperature of the electronic device 101 is equal to or less than a specified value.

The application processor 630 may receive a temperature measured by a temperature sensor (e.g., the sensor module 176 of FIG. 1). The temperature measured by the temperature sensor 176 may include the temperature of a part of the electronic device 101 in which the temperature sensor 176 is disposed. The application processor 630 may identify whether the temperature measured by the temperature sensor 176 satisfies a specified condition. The application processor 630 may determine that the temperature measured by the temperature sensor 176 is equal to or less than the specified value and determine that the electronic device 101 satisfies the condition related to connection of the first cellular communication.

The condition related to connection of the first cellular communication may include conditions related to throughput of data transmitted or received by the electronic device 101. The condition related to connection of the first cellular communication may include a condition that the throughput is equal to or greater than (or exceeds) a specified value.

The condition related to connection of the first cellular communication may include various conditions other than the temperature and throughput described above. For example, the condition related to connection of the first cellular communication may include a condition in which a display (e.g., the display module 160 of FIG. 1) is activated. For another example, the condition related to connection of the first cellular communication may include a condition related to whether a specified application is executed.

The application processor 630 may identify that the temperature and/or throughput does not satisfy the specified condition and maintain the connection of the second cellular communication. The fact that the temperature and/or the throughput does not satisfy specified conditions may refer to that the temperature of the electronic device 101 is greater than or equal to the specified value or that the throughput is less than or equal to the specified value. Maintaining the connection of the second cellular communication may refer to that the electronic device 101 may transmit and/or receive data through the second cellular communication. In response to identifying that the temperature and/or throughput does not satisfy the specified condition, the application processor 620 may maintain the connection of the second cellular communication, continuously identify the temperature and/or throughput, and identify whether the specified condition is satisfied.

The application processor 630 may identify that the state of the electronic device 101 satisfies a condition related to connection of the first cellular communication, and control the communication processor 620 to perform a series of operations for connecting the first cellular communication. The application processor 630 may transmit a signal requesting connection of the first cellular communication to the communication processor 620.

The communication processor 620 may perform a series of operations for connection of the first cellular communication based on receiving a signal requesting connection of the first cellular communication.

The communication processor 620 may search for a node (e.g., the first node 410) to be connected through the first cellular communication based on the history information stored in the memory 130. The communication processor 620 may search for a node to be connected through the first cellular communication by referring to node information (e.g., identification information of the node, frequency band supported by the node) included in the history information and connected through the first cellular communication.

The communication processor 620 may perform a connection procedure with a node to be connected through the first cellular communication when the search for the node to be connected through the first cellular communication is successful.

The communication processor 620 may retry searching (e.g., full scan) of a node to be connected through the first cellular communication through a frequency band supported by the electronic device 101 (or the communication circuit 610) when the search for the node to be connected through the first cellular communication fails. The communication processor 620 may perform a connection procedure with the node to be connected through the first cellular communication when researching for the node to be connected through the first cellular communication is successful. The communication processor 620 may maintain the connection of the second cellular communication when researching for the node to be connected through the first cellular communication fails.

Alternatively, the communication processor 620 may determine whether to perform disconnection of the first cellular communication and/or connection of the second cellular communication based on the information related to the node supporting the second cellular communication alone regardless of the reception of the signal transmitted by the application processor 630. For example, the communication processor 620 may determine whether to disconnect the first cellular communication and/or to connect with the second cellular communication based on information related to a node supporting the second cellular communication when identifying that whether the electronic device 101 satisfies a condition related to release of the first cellular communication, and when the electronic device 101 satisfies the condition related to release of the first cellular communication.

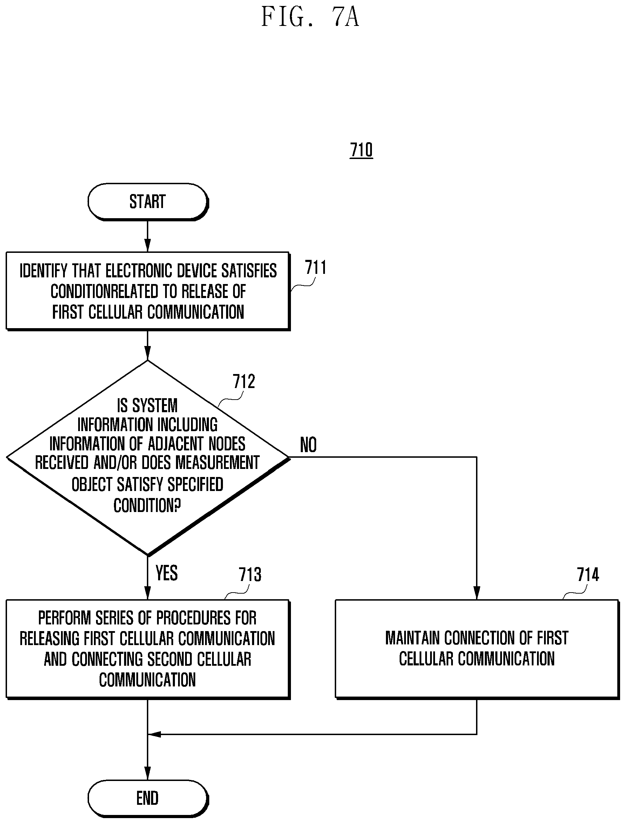

FIG. 7A is a diagram illustrating an embodiment 710 in which an electronic device according to an embodiment determines whether to release first cellular communication and/or connect with second cellular communication.

In operation 711, the electronic device (e.g., the electronic device 101 of FIG. 6) may identify that the electronic device 101 satisfies a condition related to release of the first cellular communication.

The condition related to release of the first cellular communication may include conditions related to the temperature of the electronic device 101. The condition related to release of the first cellular communication may include conditions in which the temperature of the electronic device 101 is greater than or equal to a specified value.

The electronic device 101 may receive a temperature measured by a temperature sensor (e.g., the sensor module 176 of FIG. 1). The temperature measured by the temperature sensor 176 may include the temperature of a part of the electronic device 101 in which the temperature sensor 176 is disposed. The electronic device 101 may identify whether the temperature measured by the temperature sensor 176 satisfies a specified condition. The electronic device 101 may identify that the temperature measured by the temperature sensor 176 is equal to or greater than the specified value, and determine that the electronic device 101 satisfies the condition related to release of the first cellular communication.

The condition related to release of the first cellular communication may include a condition related to throughput of data transmitted or received by the electronic device 101. The condition related to release of the first cellular communication may include a condition that the throughput is less than or equal to (or less than) a specified value.

Throughput of data transmission may be defined as a traffic amount of transmitted and/or received data per unit time. The electronic device 101 may monitor (or track) the traffic amount generated by running applications (or background applications). The electronic device 101 may monitor (or track) the traffic amount of data transmitted or received through the first cellular communication and/or the second cellular communication, and identify whether the throughput satisfies a specified condition. The electronic device 101 may identify that the throughput is less than or equal to (or less than) the specified value, and may determine that the electronic device 101 satisfies the condition related to release of the first cellular communication.

The condition related to release of the first cellular communication may include various conditions other than the temperature and throughput described above. For example, the condition related to release of the first cellular communication may include a condition in which a display (e.g., the display module 160 of FIG. 1) is deactivated. For another example, the condition related to release of the first cellular communication may include a condition related to whether the specified application is executed.

In operation 712, the electronic device 101 may identify whether to receive system information including information of adjacent nodes and/or whether a measurement object satisfies a specified condition.

Upon receiving a signal requesting disconnection of the first cellular communication, the electronic device 101 may determine whether to disconnect the first cellular communication and/or connect with the second cellular communication based on the information related to the node supporting the second cellular communication.

The information related to the node supporting the second cellular communication may include system information including information on a node adjacent to the node supporting the first cellular communication (e.g., the first node 410).

While the electronic device 101 is in an idle state of the first cellular communication, the electronic device 101 may receive system information block (SIB) broadcast by the first node 410 supporting first cellular communication. The idle state may refer to a state in which the connection with the first node 410 is released due to various reasons (e.g., data to be transmitted or received do not exist) after the electronic device 101 and the first node 410 are connected.

Alternatively, the electronic device 101 may receive system information broadcast by the first node 410 before the electronic device 101 is connected to the first node 410.

The system information broadcasted by the first node 410 may include various types of information. According to an example, the system information may include SIB 5 defined in 3GPP TS. 36.331 v15.6. The SIB 5 is a node adjacent to the first node 410 and may include information on a node (e.g., the second node 450 of FIG. 5) supporting a communication method (e.g., the second cellular communication) different from that of the first node 410. For example, when the first node 410 and the second node 450 are adjacent to each other, the first system information may include information on the second node 450. The information on the second node 450 is information required for connection with the second node 450, and may include physical cell identification (PCI) of the second node 450, a frequency band used by the second node 450, and/or a priority of the frequency band.

The system information may include not only the SIB 5 but also various system information (e.g., SIB 1). The SIB 1 may include operator information of the first node 410 or information required when accessing the first node 410 (or random access (RA)). The communication processor 620 may perform synchronization with the first node 410 based on SIB 1 and receive various system information including the SIB 5 from the first node 410.

The electronic device 101 may determine whether to disconnect the first cellular communication and/or connect with the second cellular communication based on whether the system information, which is information indicating whether the node adjacent to a node (e.g., the first node 410) connected through the first cellular communication supports the second cellular communication, has been received.

The electronic device 101 may identify a measurement object (or measobject) included in the RRC reconfiguration message received through the first node 410, and identify whether the measurement object satisfies the specified condition in the RRC connected state of the first cellular communication of the electronic device 101.

The specified condition may include a condition in which the measurement object includes information (e.g., MeasObjectEUTRA) on the node (e.g., the second node 450) supporting the second cellular communication.

The electronic device 101 may determine whether to disconnect the first cellular communication and/or connect with the second cellular communication based on whether the measurement object includes information indicating whether the node (e.g., the second node 450) adjacent to the node (e.g., the first node 410) connected through the first cellular communication supports the second cellular communication.

In operation 713, the electronic device 101 may perform a series of procedures for releasing the first cellular communication and connecting the second cellular communication based on receiving system information and/or identifying that the measurement object satisfies the specified condition (operation 712-Y).

The electronic device 101 may disconnect the first cellular communication and/or connect with the second cellular communication based on receiving the system information, which is information indicating whether the node adjacent to a node (e.g., the first node 410) connected through the first cellular communication supports the second cellular communication. A state in which the system information, which is information indicating whether the node (e.g., the second node 450) adjacent to a node (e.g., the first node 410) connected through the first cellular communication supports the second cellular communication has been received may refer to that the electronic device 101 may exist within the coverage of the node supporting the second cellular communication. Accordingly, the electronic device 101 may perform a smooth connection of the second cellular communication.

The electronic device 101 may disconnect the first cellular communication and/or connect with the second cellular communication based on that the measurement object includes information indicating whether the node (e.g., the second node 450) adjacent to the node (e.g., the first node 410) connected through the first cellular communication supports the second cellular communication.

The fact that the measurement object includes information indicating whether the node (e.g., the second node 450) adjacent to the node (e.g., the first node 410) connected through the first cellular communication supports the second cellular communication may refer to that the electronic device 101 may exist within the coverage of the node supporting the second cellular communication. Accordingly, the electronic device 101 may perform a smooth connection of the second cellular communication.

In operation 714, the electronic device 101 may maintain the first cellular communication based on not receiving the system information and/or identifying that the measurement object does not satisfy the specified condition (operation 712-N).

The electronic device 101 may maintain connection of the first cellular communication based on not receiving the system information, which is information indicating whether the node adjacent to a node (e.g., the first node 410) connected through the first cellular communication supports the second cellular communication. A state in which the system information, which is information indicating whether the node (e.g., the second node 450) adjacent to a node (e.g., the first node 410) connected through the first cellular communication supports the second cellular communication has not been received may refer to that the electronic device 101 may exist outside the coverage of the node supporting the second cellular communication. Accordingly, the electronic device 101 may prevent radio link failure (RLF) that may occur while attempting to connect with the second cellular communication, and prevent unnecessary power consumption by not attempting to connect with the second cellular communication.

The electronic device 101 may maintain connection of the first cellular communication based on that the measurement object does not include information indicating whether the node (e.g., the second node 450) adjacent to the node (e.g., the first node 410) connected through the first cellular communication supports the second cellular communication. The fact that the measurement object does not include information indicating whether the node (e.g., the second node 450) adjacent to the node (e.g., the first node 410) connected through the first cellular communication supports the second cellular communication may refer to that the electronic device 101 may exist outside the coverage of the node supporting the second cellular communication. Accordingly, the electronic device 101 may prevent radio link failure (RLF) that may occur while attempting to connect with the second cellular communication, and prevent unnecessary power consumption by not attempting to connect with the second cellular communication.

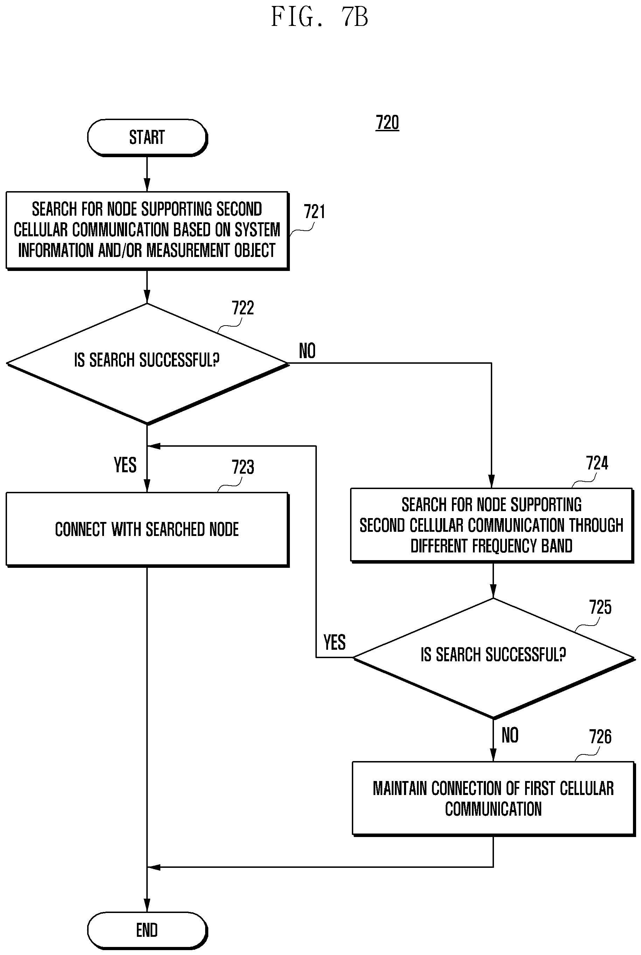

FIG. 7B is a diagram illustrating an embodiment 720 in which an electronic device according to an embodiment searches for a node supporting second cellular communication for connection of second cellular communication.

In operation 721, the electronic device (e.g., the electronic device 101 of FIG. 6) may search for the node supporting the second cellular communication based on system information and/or a measurement object.

The electronic device 101 may search for the node supporting the second cellular communication based on the frequency band used by the second node 450 included in the system information. The electronic device 101 may search for a node supporting the second cellular communication by controlling the communication circuit 610 to receive a signal of a frequency band used by the second node 450 included in the system information, and receiving the signal of the frequency band used by the second node 450 included in the system information.

The electronic device 101 may search for the node supporting the second cellular communication based on the frequency band used by the second node 450 included in the measurement object. The electronic device 101 may search for a node supporting the second cellular communication by controlling the communication circuit 610 to receive a signal of a frequency band used by the second node 450 included in the measurement object, and receiving the signal of the frequency band used by the second node 450 included in the system information.

The electronic device 101 may search for the node supporting the second cellular communication based on history information stored in a memory (e.g., the memory 130 of FIG. 1). The history information may include information on nodes to which the electronic device 101 was previously connected through the second cellular communication. The electronic device 101 may perform an operation of searching for the node previously connected through the second cellular communication by using node information included in the history information.

The electronic device 101 may activate a timer related to an operation of searching for a node connected through the second cellular communication, and search for the node to be connected through the second cellular communication until the timer expires or until the node to be connected through the second cellular communication is searched.

In operation 722, the electronic device 101 may identify whether the node search is successful.

In operation 723, the electronic device 101 may perform a connection with the searched node based on successful node search (operation 722-Y).

The electronic device 101 may select a node having the smallest bandwidth when a node supporting the second cellular communication is searched, and at least one node is found. The electronic device 101 may perform a connection procedure with the selected node.

The electronic device 101 may select a node having a smaller bandwidth than currently connected node (e.g., the first node 410) when a node supporting the second cellular communication is searched, and at least one node is found. The electronic device 101 may perform a connection procedure with the selected node.

The electronic device 101 may select a node whose quality of the searched node is equal to or greater than a specified value and a bandwidth smaller than that of a currently connected node (e.g., the first node 410) when a node supporting the second cellular communication is searched, and at least one node is found. The electronic device 101 may perform a connection procedure with the selected node.

The electronic device 101 may perform an operation of measuring the quality of a signal broadcast by the second node 450 included in the measurement object when connected to the node supporting the first cellular communication (e.g., RRC connected state). The electronic device 101 may measure the quality of the signal broadcast by the second node 450, which is the node supporting the second cellular communication, and transmit a measurement report including the quality of the signal broadcast by the second node 450 to the first node 410 or the cellular network based on the confirmation that the quality satisfies the specified condition.

The first node 410 or the cellular network receiving the measurement report may transmit a handover command to the second node 450 to the electronic device 101 according to the quality of the signal broadcast by the second node 450 included in the measurement report. The communication processor 620 may perform a series of operations (e.g., initial access) for connection with the second node 450 based on reception of the handover command.

The electronic device 101 may identify the quality of the signal broadcast by the second node 450 when the connection with the node supporting the first cellular communication is released (e.g., RRC idle state), and perform a connection (e.g., cell reselection) with the second node 450 when the signal quality satisfies a specified condition.

In operation 724, the electronic device 101 may search for the node supporting the second cellular communication through a different frequency band based on the node search failure (operation 722-N).

The electronic device 101 may search for a node supporting the second cellular communication based on system information and/or a measurement object, and when the search fails, the communication processor 620 may again attempt to search for the node supporting the second cellular communication through the frequency band of the second cellular communication (or a frequency band different from the previously searched frequency band). When attempting to search for the node supporting the second cellular communication again, the electronic device 101 may again attempt to search for the node supporting the second cellular communication through the entire frequency band supported by the communication circuit 610.

The electronic device 101 may activate a timer related to an operation of searching for a node to be connected through the second cellular communication, and repeatedly perform the operation of searching for the node to be connected through the second cellular communication (operations 721, 722, 724, and 725) until the timer expires or until the node to be connected through the secondary cellular communication is searched for.

In operation 725, the electronic device 101 may identify whether the search for the node has been successful.

The electronic device 101 may connect with the searched node (operation 723) based on the successful node search (operation 725-Y).

In operation 726, the electronic device 101 may maintain the connection of the first cellular communication based on the node search failure (operation 725-N).

The electronic device 101 may search for the node supporting the second cellular communication based on the history information, the system information, and/or the measurement object, and maintain the first cellular communication connection when the search fails. The electronic device 101 may prevent power consumption for the search for the second cellular communication by not performing the additional search.

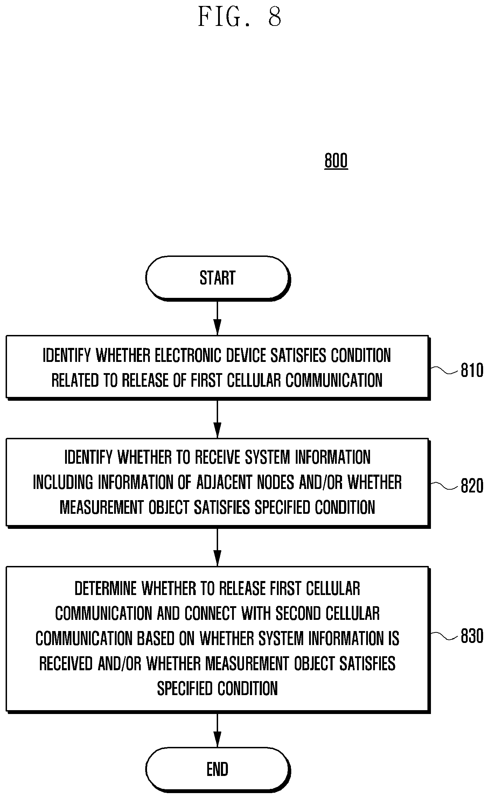

FIG. 8 is an operation flowchart 800 illustrating an operation method of an electronic device according to an embodiment.

In operation 810, the electronic device (e.g., the electronic device 101 of FIG. 6) may identify whether the electronic device 101 satisfies a condition related to release of the first cellular communication.

The condition related to release of the first cellular communication may include conditions related to the temperature of the electronic device 101. The condition related to release of the first cellular communication may include conditions in which the temperature of the electronic device 101 is greater than or equal to a specified value.

The electronic device 101 may receive a temperature measured by a temperature sensor (e.g., the sensor module 176 of FIG. 1). The temperature measured by the temperature sensor 176 may include the temperature of a part of the electronic device 101 in which the temperature sensor 176 is disposed. The electronic device 101 may identify whether the temperature measured by the temperature sensor 176 satisfies a specified condition. The electronic device 101 may identify that the temperature measured by the temperature sensor 176 is equal to or greater than the specified value, and determine that the electronic device 101 satisfies the condition related to release of the first cellular communication.

The condition related to release of the first cellular communication may include a condition related to throughput of data transmitted or received by the electronic device 101. The condition related to release of the first cellular communication may include a condition that the throughput is less than or equal to (or less than) a specified value.

Throughput of data transmission may be defined as a traffic amount of transmitted and/or received data per unit time. The electronic device 101 may monitor (or track) the traffic amount generated by running applications (or background applications). The electronic device 101 may monitor (or track) the traffic amount of data transmitted or received through the first cellular communication and/or the second cellular communication, and identify whether the throughput satisfies a specified condition. The electronic device 101 may identify that the throughput is less than or equal to (or less than) the specified value, and determine that the electronic device 101 satisfies the condition related to release of the first cellular communication.

The condition related to release of the first cellular communication may include various conditions other than the temperature and throughput described above. For example, the condition related to release of the first cellular communication may include a condition in which a display (e.g., the display module 160 of FIG. 1) is deactivated. For another example, the condition related to release of the first cellular communication may include a condition related to whether the specified application is executed.

In operation 820, the electronic device 101 may identify whether to receive system information including information of adjacent nodes and/or whether a measurement object satisfies a specified condition.

The communication processor 620, based on receiving a signal requesting disconnection of the first cellular communication, may determine whether to perform disconnection of the first cellular communication and/or connection of the second cellular communication based on information related to a node supporting the second cellular communication. The communication processor 620, based on receiving a signal indicating that a condition related to disconnection of the first cellular communication is satisfied, may determine whether to perform disconnection of the first cellular communication and/or connection of the second cellular communication based on information related to a node supporting the second cellular communication.

The information related to the node supporting the second cellular communication may include system information including information on a node adjacent to the node supporting the first cellular communication (e.g., the first node 410).

The electronic device 101 may receive system information block (SIB) broadcast by the first node 410 supporting the first cellular communication while the electronic device 101 is in an idle state of the first cellular communication. The idle state may refer to a state in which the connection with the first node 410 is released due to various causes (e.g., data to be transmitted or received does not exist) after the electronic device 101 and the first node 410 are connected.

Alternatively, the electronic device 101 may receive system information broadcast by the first node 410 before the electronic device 101 is connected to the first node 410.

The system information broadcasted by the first node 410 may include various types of information. According to an example, the system information may include SIB 5 defined in 3GPP TS. 36.331 v15.6. The SIB 5 is a node adjacent to the first node 410 and may include information on a node (e.g., the second node 450 of FIG. 5) supporting a communication method (e.g., the second cellular communication) different from that of the first node 410. For example, when the first node 410 and the second node 450 are adjacent to each other, the first system information may include information on the second node 450. The information on the second node 450 is information required for connection with the second node 450, and may include physical cell identification (PCI) of the second node 450, a frequency band used by the second node 450, and/or a priority of the frequency band.

The system information may include not only the SIB 5 but also various system information (e.g., SIB 1). The SIB 1 may include operator information of the first node 410 or information required when accessing the first node 410 (or random access (RA)). The communication processor 620 may perform synchronization with the first node 410 based on SIB 1 and receive various system information including the SIB 5 from the first node 410.

The communication processor 620 may determine whether to disconnect the first cellular communication and/or connect with the second cellular communication based on whether the system information, which is information indicating whether the node adjacent to a node (e.g., the first node 410) connected through the first cellular communication supports the second cellular communication, has been received.

The electronic device 101 may identify a measurement object (or measobject) included in the RRC reconfiguration message received through the first node 410, and identify whether the measurement object satisfies the specified condition in the RRC connected state of the first cellular communication of the electronic device 101.

The specified condition may include a condition in which the measurement object includes information (e.g., MeasObjectEUTRA) on the node (e.g., the second node 450) supporting the second cellular communication.

The electronic device 101 may determine whether to disconnect the first cellular communication and/or connect with the second cellular communication based on whether the measurement object includes information indicating whether the node (e.g., the second node 450) adjacent to the node (e.g., the first node 410) connected through the first cellular communication supports the second cellular communication.

In operation 830, the electronic device 101 may determine whether to disconnect the first cellular communication and connect with the second cellular communication based on whether system information is received and/or whether the specified condition of the measurement object is satisfied.

The electronic device 101 may disconnect the first cellular communication and/or connect with the second cellular communication based on receiving the system information, which is information indicating whether the node adjacent to a node (e.g., the first node 410) connected through the first cellular communication supports the second cellular communication. A state in which the system information, which is information indicating whether the node (e.g., the second node 450) adjacent to a node (e.g., the first node 410) connected through the first cellular communication supports the second cellular communication has been received may refer to that the electronic device 101 may exist within the coverage of the node supporting the second cellular communication. Accordingly, the electronic device 101 may perform a smooth connection of the second cellular communication.

The electronic device 101 may disconnect the first cellular communication and/or connect with the second cellular communication based on that the measurement object includes information indicating whether the node (e.g., the second node 450) adjacent to the node (e.g., the first node 410) connected through the first cellular communication supports the second cellular communication.

The fact that the measurement object includes information indicating whether the node (e.g., the second node 450) adjacent to the node (e.g., the first node 410) connected through the first cellular communication supports the second cellular communication may refer to that the electronic device 101 may exist within the coverage of the node supporting the second cellular communication. Accordingly, the electronic device 101 may perform a smooth connection of the second cellular communication.

The electronic device 101 may maintain connection of the first cellular communication based on not receiving the system information, which is information indicating whether the node adjacent to a node (e.g., the first node 410) connected through the first cellular communication supports the second cellular communication. A state in which the system information, which is information indicating whether the node (e.g., the second node 450) adjacent to a node (e.g., the first node 410) connected through the first cellular communication supports the second cellular communication has not been received may refer to that the electronic device 101 may exist outside the coverage of the node supporting the second cellular communication. Accordingly, the electronic device 101 may prevent radio link failure (RLF) that may occur while attempting to connect with the second cellular communication, and prevent unnecessary power consumption by not attempting to connect with the second cellular communication.

The electronic device 101 may maintain connection of the first cellular communication based on that the measurement object does not include information indicating whether the node (e.g., the second node 450) adjacent to the node (e.g., the first node 410) connected through the first cellular communication supports the second cellular communication. The fact that the measurement object does not include information indicating whether the node (e.g., the second node 450) adjacent to the node (e.g., the first node 410) connected through the first cellular communication supports the second cellular communication may refer to that the electronic device 101 may exist outside the coverage of the node supporting the second cellular communication. Accordingly, the electronic device 101 may prevent radio link failure (RLF) that may occur while attempting to connect with the second cellular communication, and prevent unnecessary power consumption by not attempting to connect with the second cellular communication.

An operation method of an electronic device according to various embodiments of the present disclosure may include while the electronic device is connected through the first cellular communication, identifying, by an application processor of the electronic device, whether the electronic device satisfies a condition related to release of the first cellular communication of the electronic device; in case the electronic device satisfies the condition related to release of the first cellular communication, transmitting to a communication processor of the electronic device, by the application processor, a signal indicating that the condition related to release of the first cellular communication is satisfied; on reception of the signal indicating that the condition related to release of the first cellular communication is satisfied, identifying, by the communication processor, whether system information including information on a node adjacent to the node received from the node connected through the first cellular communication is received and/or whether a measurement object satisfies a specified condition; in case the system information is received and/or whether the measurement object satisfies a specified condition, disconnecting, by the communication processor, the first cellular communication; and based on the system information and/or the measurement object, determining whether to connect with the second cellular communication.

In the operation method of the electronic device according to various embodiments, the disconnecting the first cellular communication may be based on reception of the system information, and the connecting the second cellular communication is based on the system information.

In the operation method of the electronic device according to various embodiments, the specified condition may comprise a condition in which information on a node supporting the second cellular communication is included in the measurement object.

In the operation method of the electronic device according to various embodiments, the disconnecting the first cellular communication may be based on identifying that the information on the node supporting the second cellular communication is included in the measurement object, and connecting the second cellular communication may be based on the information on the node supporting the second cellular communication.

In the operation method of the electronic device according to various embodiments, the connecting the second cellular communication may comprise searching for a node through the smallest frequency band among frequency bands included in the system information and/or the measurement object.

In the operation method of the electronic device according to various embodiments, the connecting of the second cellular communication may comprise selecting a node supporting a frequency band lower than the frequency band of the node connected through the first cellular communication from among nodes searched through frequency bands included in the system information and/or the measurement object; and connecting to the selected node through the second cellular communication.

The operation method of any of the preceding claims according to various embodiments may further comprise, in case the system information is not received and/or the measurement object does not satisfy the specified condition, maintaining the connection of the first cellular communication.

The operation method of any of the preceding claims according to various embodiments may further comprise maintaining the connection of the first cellular communication in case there is a failure history of connection through the node searched through the system information and/or the measurement object.

The operation method of any of the preceding claims according to various embodiments may further comprise, in case the search for a node to be connected through the second cellular communication based on the system information and/or the measurement object is unsuccessful, searching for another node broadcasting a signal of the frequency band supported by the second cellular communication; and in case another node is not found, maintaining the connection of the first cellular communication.

The operation method of any of the preceding claims according to various embodiments may further comprise, in case the search for the node to be connected through the second cellular communication based on the system information and/or the measurement object is unsuccessful, maintaining the connection of the first cellular communication.

An electronic device according to various embodiments of the present disclosure may include a communication circuit supporting first cellular communication and second cellular communication; an application processor; and a communication processor, wherein the application processor is configured to: while the electronic device is connected through the first cellular communication, identify whether the electronic device satisfies a condition related to release of the first cellular communication; and in case the electronic device satisfies the condition related to release of the first cellular communication, transmit, to the communication processor, a signal indicating that the condition related to release of the first cellular communication is satisfied, and wherein the communication processor is configured to on reception of the signal indicating that the condition related to release of the first cellular communication is satisfied, identify whether system information including information on a node adjacent to the node received from the node connected through the first cellular communication is received and/or whether a measurement object satisfies a specified condition; in case the system information is received and/or the measurement object satisfies the specified condition, disconnect the first cellular communication; and based on the system information and/or the measurement object, connect with the second cellular communication.

In the electronic device according to various embodiments, the communication processor may be configured to disconnect the first cellular communication based on reception of the system information, and connect with the second cellular communication based on the system information.

In the electronic device according to various embodiments the specified condition comprises a condition in which information on a node supporting the second cellular communication is included in the measurement object.

In the electronic device according to various embodiments, the communication processor may be configured to disconnect the first cellular communication based on identifying that the information on the node supporting the second cellular communication is included in the measurement object, and to connect with the second cellular communication based on the information on the node supporting the second cellular communication.

In the electronic device according to various embodiments, the communication processor may be configured to searching for a node through the smallest frequency band among frequency bands included in the system information and/or the measurement object as a part of the operation of connecting the second communication.

In the electronic device according to various embodiments, the communication processor may be configured to select a node supporting a frequency band lower than the frequency band of the node connected through the first cellular communication from among nodes searched through frequency bands included in the system information and/or the measurement object as a part of the operation of connecting the second communication; and connect to the selected node through the second cellular communication.

In the electronic device according to various embodiments, the communication processor may be configured to, in case the system information is not received and/or the measurement object does not satisfy the specified condition, maintain the connection of the first cellular communication.

In the electronic device according to various embodiments, the communication processor may be configured to maintain the connection of the first cellular communication in case that there is a failure history of connection through the node searched through the system information and/or the measurement object.

In the electronic device according to various embodiments, the communication processor may be configured to, in case the search for a node to be connected through the second cellular communication based on the system information and/or the measurement object is unsuccessful, search for another node broadcasting a signal of the frequency band supported by the second cellular communication; and in case another node is not found, maintain the connection of the first cellular communication.

In the electronic device according to various embodiments, the communication processor may be configured to, in case the search for the node to be connected through the second cellular communication based on the system information and/or the measurement object is unsuccessful, maintain the connection of the first cellular communication.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication circuit supporting first cellular communication and second cellular communication;
an application processor; and
a communication processor,
wherein the application processor is configured to:
while the electronic device is connected through the first cellular communication, identify whether the electronic device satisfies a condition related to release of the first cellular communication; and
in case the electronic device satisfies the condition related to release of the first cellular communication, transmit, to the communication processor, a signal indicating that the condition related to release of the first cellular communication is satisfied, and
wherein the communication processor is configured to:
on reception of the signal indicating that the condition related to release of the first cellular communication is satisfied, identify whether system information including information on a node adjacent to the node received from the node connected through the first cellular communication is received and/or whether a measurement object satisfies a specified condition;
in case the system information is received and/or the measurement object satisfies the specified condition, disconnect the first cellular communication; and
based on the system information and/or the measurement object, connect with the second cellular communication.

2. The electronic device of claim 1, wherein the communication processor is configured to disconnect the first cellular communication based on reception of the system information, and connect with the second cellular communication based on the system information.

3. The electronic device of claim 1, wherein the specified condition comprises a condition in which information on a node supporting the second cellular communication is included in the measurement object.

4. The electronic device of any of claims 1, wherein the communication processor is configured to disconnect the first cellular communication based on identifying that the information on the node supporting the second cellular communication is included in the measurement object, and to connect with the second cellular communication based on the information on the node supporting the second cellular communication.

5. The electronic device of claim 1, wherein the connecting the second cellular communication comprises searching for a node through the smallest frequency band among frequency bands included in the system information and/or the measurement object.

6. The electronic device of claim 1, wherein the communication processor is configured to:
select a node supporting a frequency band lower than the frequency band of the node connected through the first cellular communication from among nodes searched through frequency bands included in the system information and/or the measurement object; and
connect to the selected node through the second cellular communication.

7. The electronic device of claim 1, wherein the communication processor is configured to:
in case the system information is not received and/or the measurement object does not satisfy the specified condition, maintain the connection of the first cellular communication.

8. The electronic device of claim 1, wherein the communication processor is configured to maintain the connection of the first cellular communication in case there is a failure history of connection through the node searched through the system information and/or the measurement object.

9. The electronic device of claim 1 , wherein the communication proceesor is configured to:
in case the search for a node to be connected through the second cellular communication based on the system information and/or the measurement object is unsuccessful, search for another node broadcasting a signal of the frequency band supported by the second cellular communication; and
in case the search for another node is not successful, maintain the connection of the first cellular communication.

10. The electronic device of claim 1, wherein the communication processor is configured to:
in case the search for the node to be connected through the second cellular communication based on the system information and/or the measurement object is unsuccessful, maintain the connection of the first cellular communication.

11. An operation method of an electronic device, the operation method comprising:
while the electronic device is connected through the first cellular communication, identifying, by an application processor of the electronic device, whether the electronic device satisfies a condition related to release of the first cellular communication of the electronic device;
in case the electronic device satisfies the condition related to release of the first cellular communication, transmitting to a communication processor of the electronic device, by the application processor, a signal indicating that the condition related to release of the first cellular communication is satisfied;
on reception of the signal indicating that the condition related to release of the first cellular communication is satisfied, identifying, by the communication processor, whether system information including information on a node adjacent to the node received from the node connected through the first cellular communication is received and/or whether a measurement object satisfies a specified condition;
in case the system information is received and/or whether the measurement object satisfies a specified condition, disconnecting, by the communication processor, the first cellular communication; and
based on the system information and/or the measurement object, determining whether to connect with the second cellular communication.

12. The operation method of claim 11, wherein the disconnecting the first cellular communication is based on reception of the system information, and the connecting the second cellular communication is based on the system information.

13. The operation method of claim 11, wherein the specified condition comprises a condition in which information on a node supporting the second cellular communication is included in the measurement object.

14. The operation method of claim 11, wherein the disconnecting the first cellular communication is based on identifying that the information on the node supporting the second cellular communication is included in the measurement object, and connecting the second cellular communication is based on the information on the node supporting the second cellular communication.

15. The operation method of claim 11, wherein the connecting the second cellular communication comprises searching for a node through the smallest frequency band among frequency bands included in the system information and/or the measurement object.
